# EUROPEAN PATENT SPECIFICATION

(11) **EP 2 031 992 B1**
(45) Date of publication and mention of the grant of the patent: **06.03.2013**
(21) Application number: 07748287.5
(22) Date of filing: 26.06.2007
(51) Int. Cl.: A42B 3/12, B32B 5/18

(54) **IMPACT DAMPING MATERIAL. HELMET AND PANEL INCORPORATING THE SAME**
STOSSDÄMPFUNGSMATERIAL, HELM UND PLATTE MIT DIESEM MATERIAL
MATÉRIAU D'AMORTISSEMENT DES CHOCS, CASQUE ET PANNEAU L'INCORPORANT

(30) Priority: 26.06.2006 SE 0601404
(43) Date of publication of application: 11.03.2009
(73) Proprietor: Piren Venture AB, 374 35 Karlshamn (SE)
(72) Inventor: ERVASTI, Esa, S-141 38 Huddinge (SE)
(74) Representative: Andersson, Mikael Per Robert
(86) International application number: PCT/SE2007/000626
(87) International publication number: WO 2008/002248

(56) References cited:
- FR-A1- 2 704 190
- GB-A- 1 316 722
- US-A- 4 567 091
- US-A- 5 675 844
- US-A- 5 675 844
- US-A- 6 098 209
- US-A- 6 098 209
- US-A1- 2003 140 401
- US-A1- 2006 059 606
- US-A1- 2006 059 606
- US-A1- 2006 260 026
- US-B1- 6 175 967

## Description

### Field of the invention

The present invention relates to a sandwich material for impact damping. Further, the invention relates to a helmet or a panel with the sandwich material according to the invention.

### Background of the invention

In conventional impact damping applications, e.g. helmets, panels or the like, the energy from the impact is converted to heat by crushing or deformation of a foam. There are two major categories of foams; stiff and crushable foams and rubbery foams. The damping characteristics are dependent on the foam characteristics and the foam thickness. From Brock USA a closed-cell foam which is still porous is available. The foam consists of polypropylene or polyethylene beads. The beads are fused together by just touching their tangent points to obtain a porous foam.

In US 6,098,209 protective paddings for sports gear are disclosed wherein elastic beads are filled in an outer casing of a breathable layer. When an impact or force is applied on the padding the beads are compressed to absorb and dissipate the impact. After compression the pads rebound to create a pumping effect that circulates air into and out of the pads through the breathable outer layer thereby drawing heat and perspiration out of the user's body.

Published application US2006/0059606 discloses a multilayer shell for use in the construction of protective headgear. The application includes an outer layer, an inner layer and a middle layer between the outer and inner layer. The middle layer includes a plurality of compressible members which absorb the energy of an impact. The members may have a bellows-like construction . The bellows have small openings through which air is expelled. Around the members a free flow of air may be allowed during an impact. The application further dicloses that the members may be spheres having a diameter of 3 to 12 mm. US 5,675,844 discloses a protective pad comprising virol and outer layers of foamed polyethylene with an intermediate layer of foamed polystyrene granules having diameters of 1.0 to 10.0 mm.

Although there are materials available for impact damping there are several drawbacks with these available materials. The materials for use in protection will often result in e.g. helmets which are excessively large and not very user friendly or panels in a vehicle which will reduce the space available.

There is a need for an improved material for impact damping.

### Summary of the Invention

An object of the invention is to provide a material which may absorb large quantities of impact energy and which is space efficient.

The above object is achieved in accordance with the present invention with a sandwich material according to claim 1 comprising a first layer having a low gas permeability and a second layer being compressible, preferably resilient, and having gas flow channels for internal gas flow communication wherein said gas flow channels are provided with convolutions adapted to provide a plurality of velocity direction changes of a gas flow in said gas flow channels. The material forming the second layer may also inherently provide a viscous damping.

The material may be used in different kinds of damping applications. One embodiment concerns the protection of the user's head e.g. in a helmet. In this case the protected object is surrounded by the damping material offering protection. Another embodiment concerns a material which is applied on a surface and the purpose of this material is to protect an object being thrown towards the surface, such as a person being thrown against a panel in a car in a collision. In this case the damping material form e.g. a panel in a car.

When the sandwich material according to the present invention is subjected to an impact it will absorb the impact effectively. The second layer will be locally compressed by the impact and the air or gas previously located in the compressed region in the second layer will be forced to escape in the flow channels from the place of impact. Due to the convolutions/obstacles in the second layer the gas flow has to change direction many times and the direction changes of the gas flow will render in conversion of the kinetic energy in the gas to heat energy. The first layer with low gas permeability will force the gas flow to flow along the plane of the damping material and more effectively force the air to be subjected to more velocity changes. A low gas permeability of the first layer will provide a gas flow in the plane of the layers. If the first layer would not be present the gas flow would easily escape in the normal direction of the second layer, i.e. in a too short distance with too few velocity changes and the damping effect would not be sufficient. Low gas permeability means that gas or air will mainly be forced to escape through the second layer. Thus, the gas permeability is a relation between the ability of the second layer to transport gas and the ability of the first layer to withstand transport of gas at compression of the sandwich material. A benefit of the sandwich material according to the invention is that a thin and less bulky material may be obtained, but still with good impact damping properties.

The second layer may have particles having average sizes in the range of 0.06 mm to 0.2 mm by which a simple material may be obtained. The particles may be spherical and they are preferably connected to each other to form gas flow channels between the particles. The particles will act as obstacles for the gas flow. This way the gas flow channels between the particles will be provided with convolutions for the conversion of kinetic energy to heat energy.

The second layer of the sandwich material has a relative density in the range of 5% to 30%. The relative density in this context is a measure of the actual density of the porous second layer compared to a solid of the material forming the second layer and is expressed as the percentage of the actual density and the full density of the material in the second layer. Thereby it is possible to compress the second layer to an extent which will provide an effective impact damping. A low relative density will result in a large amount of air being compressed by the impact. This will however also lower the stiffness of the material. The indicated ranges are considered a suitable balance of providing stiffness and damping.

Preferred embodiments follow from the dependent claims.

A third layer having low gas permeability in the sandwich material may direct the gas flow within the second layer between the first and third layer and will force the gas flow to change direction to a larger extent and to improve the damping effect. The third layer being arranged to the second layer on the opposite side compared to the first layer. The gas permeability of the third layer may differ from the gas permeability of the first layer. It may be noted that this third layer may be formed of another object to which a sandwich material comprising said first layer and said second layer is attached.

The first layer in the sandwich material may also be a load distributing layer whereby a local impact causes compression of the second layer in a region larger than the impact zone. This first layer may also as such convert some of the impact energy to crash energy within the first load distributing layer. The first layer may be in form of e.g. a hard shell or similar forming a load distributing layer having a structural bending strength. The load distributing layer may also be a relative thin material having a high stiffness in the plane of the material thereby providing a load distributing layer. This stiffness may e.g. be provided by fibres in a matrix made of e.g. resin.

A body protection device, e.g. a helmet, may comprise the sandwich material according to the invention. The sandwich material may also be used for panels in e.g. cars.

### Brief description of the drawings

The invention will in the following be described by way of example with reference to the appended schematic drawings which show presently preferred embodiments:
Fig 1 illustrates an impact damping material according to a first embodiment.
Fig 2 illustrates an impact damping material according to a second embodiment.
Fig 3 illustrates a helmet with the material according to the invention.

### Description of preferred embodiments

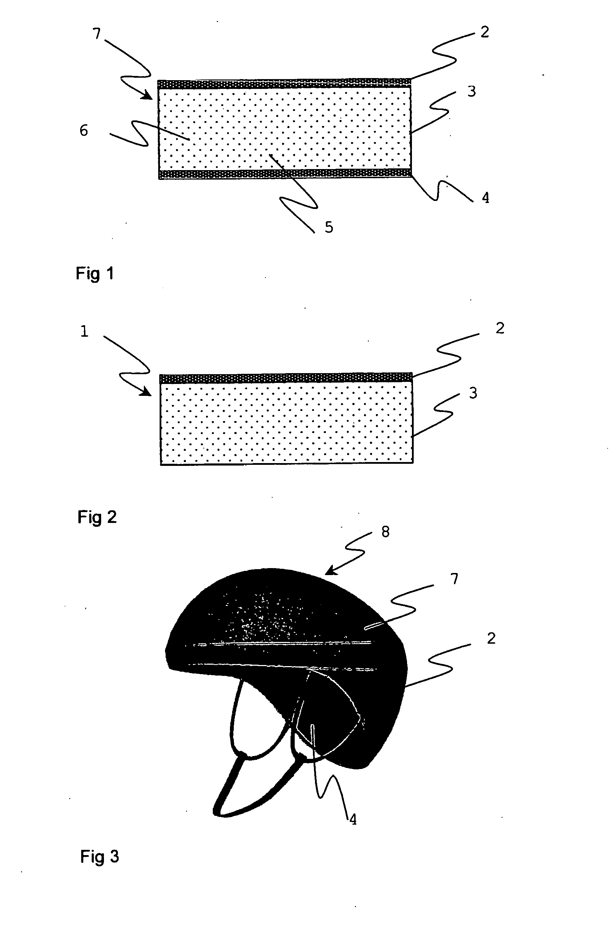

In a preferred embodiment the sandwich material 7 for impact damping according to the invention, shown in figure 1, is used in a helmet 8 according to fig 3.

The sandwich material 7 in fig 1 comprises a first 2 layer which is load distributing and has low gas permeability. It further comprises a second 3 layer comprising particles 6, such as a semi-closed microcellular structure, being attached to each other and are adapted to allow a gas flow in gas channels 5 between the particles when the sandwich material is subjected to compression. The cells are resilient to provide compressibility of the sandwich material. The second layer may also provide viscous damping. A third 4 layer with low gas permeability will further provide a possibility to direct the gas flow from the site of compression to the volume in the second 3 layer surrounding the compressed region. The third 4 layer faces the head of the user, possibly with other layers between the third layer and the head. To allow an efficient impact damping the sandwich material 7 may have a thickness of about 10 mm. This thickness is sufficient to allow an object to be protected to be stopped in a time which will not give rise to serious injuries and at the same time giving a helmet which is comfortable to wear due to the comparable thin sandwich material 7. To be able to provide this impact damping a relative density should be about 10-20%. The sandwich material 7 may be compressed to about 2 mm which will be enough not to cause damage to the brain and head of the person who is wearing the helmet 8 made of the sandwich material 7. Further the particle size will have an influence on the damping characteristic as the number of velocity changes will depend on the number of particles in the second layer. In this embodiment the average particle size of the particles is in the range 0.05 to 0.2 mm, preferably about 0.1 mm.

In another embodiment the second 3 layer is a plastic foam with closed and open cells. The relationship between closed and open cells are 50-80% closed cells and 50-20% open cells. The average cell size is in the range 0.05 to 0.2 mm, preferably about 0.1 mm.

According to fig 2 the sandwich material 1 may also comprise a first 2 layer with low gas permeability and a second 3 layer with a semi-closed microcellular structure. This material 1 may be used for protection panels in cars, wherein the passengers may be injured in case of a collision. The material 1 in this sense may be thicker than a material in a helmet 8 and accordingly the size of the closed cells may be larger. The panel may also be mounted to a base providing a third layer having relatively low gas permeability.

## Claims

1. Sandwich material (1) for impact damping, comprising a first (2) layer having a low gas permeability and a second (3) layer being compressible and having gas flow channels (5) for internal gas flow communication, wherein the material in the second (3) layer has a relative density in the range of 5 to 30%, wherein said gas flow channels (5) are provided with convolutions adapted to provide a plurality of velocity direction changes of a gas flow in said gas flow channels (5), thereby converting kinetic energy in the gas to heat energy, the convolutions being formed by particles (6) having average particle sizes in the range of 0.05 mm to 0.2 mm or a foam with closed and open cells having average cell sizes in the range of 0.05 mm to 0.2 mm, wherein the relationship between closed and open cells is 50-80% closed cells and 50-20% open cells.

2. Sandwich material (1) according to claim 1, wherein the second (3) layer is a material having particles (6) forming said gas flow channels (5) between the particles (5).

3. Sandwich material (7) according to any one of claims 1 to 2, further comprising a third (4) layer having low gas permeability, the third layer being arranged to the second layer (3) on the opposite side compared to the first layer (2).

4. Sandwich material according to any one of claims 1 to 3, wherein the first (2) layer is load distributing whereby a local impact causes compression of the second (3) layer in a region larger than the impact zone.

5. Helmet (8) comprising the sandwich material (7) according to any one of claims 1 to 4.

6. Panel comprising the sandwich material (1 ;7) according to any one of claims 1 to 4.

## Patentansprüche

1. Sandwichmaterial (1) zur Stoßdämpfung, umfassend eine erste (2) Schicht mit einer niedrigen Gaspermeabilität und eine zweite (3) Schicht, die komprimierbar ist und Gasströmungskanäle (5) zum internen Gasströmungsaustausch aufweist, wobei das Material in der zweiten (3) Schicht eine relative Dichte im Bereich von 5 bis 30 % aufweist, wobei die Gasströmungskanäle (5) mit Windungen versehen sind, die mehrere Geschwindigkeitsrichtungsänderungen eines Gasstroms in den Gasströmungskanälen (5) bereitstellen können, sodass kinetische Energie in dem Gas in Wärmeenergie umgewandelt wird, wobei die Windungen durch Teilchen (6), die durchschnittliche Teilchengrößen im Bereich von 0,05 mm bis 0,2 mm aufweisen, oder einen Schaum mit geschlossenen und offenen Zellen mit durchschnittlichen Zellengrößen im Bereich von 0,05 mm bis 0,2 mm ausgebildet sind, wobei die Beziehung zwischen geschlossenen und offenen Zellen 50 bis 80 % geschlossene Zellen und 50 bis 20 % offene Zellen beträgt.

2. Sandwichmaterial (1) nach Anspruch 1, wobei die zweite (3) Schicht ein Material mit Teilchen (6) ist, die die Gasströmungskanäle (5) zwischen den Teilchen (5) bilden.

3. Sandwichmaterial (7) nach einem der Ansprüche 1 bis 2, ferner umfassend eine dritte (4) Schicht mit niedriger Gaspermeabilität, wobei die dritte Schicht im Vergleich zu der ersten Schicht (2) in Bezug auf die zweite Schicht (3) auf der gegenüberliegenden Seite angeordnet ist.

4. Sandwichmaterial nach einem der Ansprüche 1 bis 3, wobei die erste (2) Schicht Last verteilend ist, wodurch ein lokaler Stoß die Kompression der zweiten (3) Schicht in einem Bereich bewirkt, der größer als die Stoßzone ist.

5. Helm (8), umfassend das Sandwichmaterial (7) nach einem der Ansprüche 1 bis 4.

6. Platte, umfassend das Sandwichmaterial (1; 7) nach einem der Ansprüche 1 bis 4.

## Revendications

1. Matériau sandwich (1) pour amortir les chocs, comprenant une première (2) couche ayant une faible perméabilité aux gaz et une deuxième (3) couche étant compressible et ayant des canaux d'écoulement gazeux (5) pour la communication interne de l'écoulement gazeux, dans lequel le matériau dans la deuxième (3) couche a une densité relative dans la gamme de 5 à 30 %, dans lequel lesdits canaux d'écoulement gazeux (5) sont dotés de convolutions adaptées pour fournir une pluralité de changements de direction de la vitesse d'un écoulement gazeux dans lesdits canaux d'écoulement gazeux (5), en convertissant ainsi l'énergie cinétique dans le gaz en énergie thermique, les convolutions étant formées par des particules (6) ayant une dimension moyenne des particules dans la gamme de 0,05 mm à 0,2 mm ou une mousse à alvéoles fermées et ouvertes ayant une dimension moyenne des alvéoles dans la gamme de 0,05 mm à 0,2 mm, dans lequel la relation entre les alvéoles fermées et ouvertes est de 50 à 80 % d'alvéoles fermées et de 50 à 20 % d'alvéoles ouvertes.

2. Matériau sandwich (1) selon la revendication 1, dans lequel la deuxième (3) couche est un matériau ayant des particules (6) formant lesdits canaux d'écoulement gazeux (5) entre les particules (5).

3. Matériau sandwich (7) selon l'une quelconque des revendications 1 à 2, comprenant en outre une troisième (4) couche ayant une faible perméabilité aux gaz, la troisième couche étant agencée en fonction de la deuxième couche (3) sur le côté opposé par rapport à la première couche (2).

4. Matériau sandwich selon l'une quelconque des revendications 1 à 3, dans lequel la première (2) couche présente une répartition des charges telle qu'un choc local provoque la compression de la deuxième (3) couche dans une région plus grande que la zone de choc.

5. Casque (8) comprenant le matériau sandwich (7) selon l'une quelconque des revendications 1 à 4.

6. Panneau comprenant le matériau sandwich (1 ; 7) selon l'une quelconque des revendications 1 à 4.
